# EUROPEAN PATENT APPLICATION

(11) **EP 4 575 938 A1**
(43) Date of publication of application: **25.06.2025**
(21) Application number: 24220321.4
(22) Date of filing: 16.12.2024
(51) Int. Cl.: G06N 20/00

(54) **DETECTION OF A STRAGGLER USER EQUIPMENT IN FEDERATED LEARNING OVER AN AIR INTERFACE**

(30) Priority: 20.12.2023 US 202318390507
(71) Applicant: Nokia Technologies Oy, 02610 Espoo (FI)
(72) Inventor: BUTT, Muhammad Majid, Naperville, 60565 (US); KOVÁCS, István Zsolt, 9000 Aalborg (DK)
(74) Representative: Script Intellectual Property LLP

(57) **Abstract**

Detection of a straggler user equipment in federated learning over an air interface is provided. A method for detection of a straggler user equipment in federated learning may include identifying one or more straggler devices among a plurality of user devices and suspending transmission of an aggregated model to the one or more straggler devices for local model training. The method may also include resuming the transmission of the aggregated model to at least one of the one or more straggler devices for the local model training.

## Description

### TECHNICAL FIELD:

Some example embodiments may generally relate to mobile or wireless telecommunication systems, such as Long Term Evolution (LTE) or fifth generation (5G) new radio (NR) access technology, or 5G beyond, or sixth generation (6G) access technology or other communications systems. For example, certain example embodiments may relate to the detection of a straggler user equipment (UE) in federated learning (FL) over an air interface.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, fifth generation (5G) radio access technology or new radio (NR) access technology and/or sixth generation (6G) radio access technology. Fifth generation (5G) and sixth generation (6G) wireless systems refer to the next generation (NG) of radio systems and network architecture. 5G and 6G network technology is mostly based on new radio (NR) technology, but the 5G/6G (or NG) network can also build on E-UTRAN radio. It is estimated that NR may provide bitrates on the order of 10-20 Gbit/s or higher and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Various exemplary embodiments may provide an apparatus comprising at least one processor and at least one memory storing instructions that, when executed by the at least one processor, cause the apparatus at least to identify one or more straggler devices among a plurality of user devices. The apparatus may also be caused to suspend transmission of an aggregated model to the one or more straggler devices for local model training and resume the transmission of the aggregated model to at least one of the one or more straggler devices for the local model training.

Certain exemplary embodiments may provide an apparatus comprising at least one processor and at least one memory storing instructions that, when executed by the at least one processor, cause the apparatus at least to transmit, to a network entity, a locally trained model generated from local model training. The apparatus may also be caused to receive, from the network entity, an indication that the apparatus is identified as a straggler device and that transmission of an aggregated model is suspended and resume receiving, from the network entity, the aggregated model based on determining a reduction in a delay in transmitting the locally trained model.

Some exemplary embodiments may provide a method comprising identifying, by an apparatus, one or more straggler devices among a plurality of user devices, suspending, by the apparatus, transmission of an aggregated model to the one or more straggler devices for local model training, and resuming, by the apparatus, the transmission of the aggregated model to at least one of the one or more straggler devices for the local model training.

Certain exemplary embodiments may provide a method comprising transmitting, by an apparatus to a network entity, a locally trained model generated from local model training, receiving, by the apparatus from the network entity, an indication that the apparatus is identified as a straggler device and that transmission of an aggregated model is suspended, and resuming receiving, by the apparatus from the network entity, the aggregated model based on determining a reduction in a delay in transmitting the locally trained model.

Various exemplary embodiments may provide an apparatus comprising means for identifying one or more straggler devices among a plurality of user devices, means for suspending transmission of an aggregated model to the one or more straggler devices for local model training, and means for resuming the transmission of the aggregated model to at least one of the one or more straggler devices for the local model training.

Some exemplary embodiments may provide an apparatus comprising means for transmitting, to a network entity, a locally trained model generated from local model training, means for receiving, from the network entity, an indication that the apparatus is identified as a straggler device and that transmission of an aggregated model is suspended, and means for resuming receiving, from the network entity, the aggregated model based on determining a reduction in a delay in transmitting the locally trained model.

Various exemplary embodiments may provide a non-transitory computer readable medium comprising program instructions that, when executed by an apparatus, cause the apparatus at least to identify one or more straggler devices among a plurality of user devices. The apparatus may also be caused to suspend transmission of an aggregated model to the one or more straggler devices for local model training and resume the transmission of the aggregated model to at least one of the one or more straggler devices for the local model training.

Certain exemplary embodiments may provide a non-transitory computer readable medium comprising program instructions that, when executed by an apparatus, cause the apparatus at least to transmit, to a network entity, a locally trained model generated from local model training. The apparatus may also be caused to receive, from the network entity, an indication that the apparatus is identified as a straggler device and that transmission of an aggregated model is suspended and resume receiving, from the network entity, the aggregated model based on determining a reduction in a delay in transmitting the locally trained model.

Some exemplary embodiments may provide a non-transitory computer readable medium comprising program instructions that, when executed, cause an apparatus to perform one of the methods described herein. Various exemplary embodiments may provide a computer program that, when executed, causes an apparatus to perform one of the methods described herein.

### BRIEF DESCRIPTION OF THE DRAWINGS:

For proper understanding of example embodiments, reference should be made to the accompanying drawings, as follows:
FIG. 1 illustrates an example configuration of a federated learning (FL) model in a wireless network;
FIG. 2 illustrates an example of a diagram showing time for different UEs to provide model data to a network;
FIG. 3 illustrates an example of a signal diagram, according to various exemplary embodiments;
FIG. 4 an example of a flow diagram of a method, according to some exemplary embodiments;
FIG. 5 an example of a flow diagram of another method, according to certain exemplary embodiments; and
FIG. 6 illustrates a set of apparatuses, according to various exemplary embodiments.

### DETAILED DESCRIPTION:

It will be readily understood that the components of certain example embodiments, as generally described and illustrated in the figures herein, may be arranged and designed in a wide variety of different configurations. The following is a detailed description of some exemplary embodiments of systems, methods, apparatuses, and non-transitory computer program products for detection of a straggler user equipment (UE) in federated learning (FL) over an air interface. Although the devices discussed below and shown in the figures refer to 5G/6G or Next Generation NodeB (gNB) network entities and/or devices and user equipment (UE) devices, this disclosure is not limited to only network entities/devices and UEs.

It may be readily understood that the components of certain example embodiments, as generally described and illustrated in the figures herein, may be arranged and designed in a wide variety of different configurations. Different reference designations from multiple figures may be used out of sequence in the description, to refer to a same element to illustrate their features or functions. If desired, the different functions or procedures discussed herein may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Modern mobile networks may require a large amount of data from multiple distributed data sources, such as, for example, nodes, UEs, and the like. Mobile networks which employ one or more artificial intelligence/machine learning (ML) models may require even larger amounts of data to be processed to train the model, such as a single common model. For example, data may be generated by one or more distributed units on the mobile network which may provide the generated data to one or more centralized units of the mobile network, where the common ML model may be created and trained. To minimize the data exchange between distributed units and the centralized units, a concept which may be referred to as federated learning (FL) may be applied.

FL is a form of machine learning in which different versions of the model are trained at different distributed hosts, instead of training the model at a single node. FL may be distinct from distributed ML, where a single ML model may be trained at distributed nodes to use computation power of different nodes. For example, FL may be different from distributed learning because each distributed node in an FL scenario has its own local training data which may not come from the same distribution as the data at other nodes. FL may also be different because each node computes parameters for its local ML model and the central host does not compute a version or part of the model. Instead, the central host may combine parameters of all the distributed models to generate a centralized/common model. This FL procedure may allow for the training dataset to remain where it is generated and perform the model training locally at each individual learner in the federation (e.g., network or collection of network units).

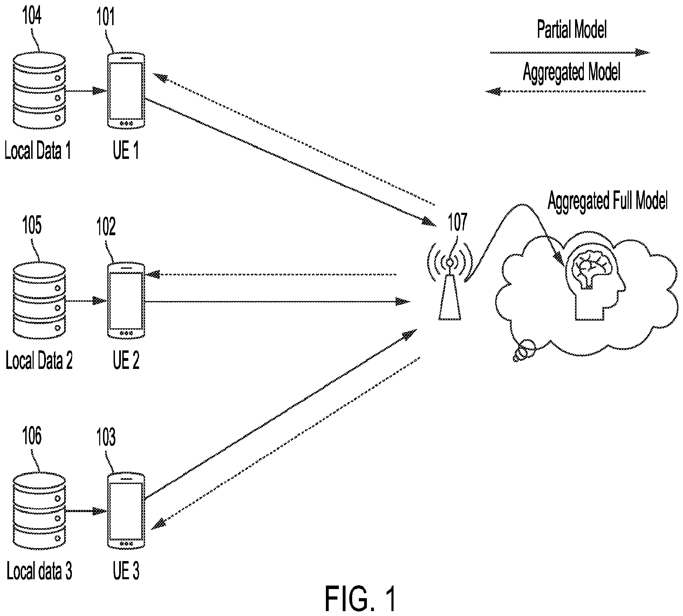

FIG. 1 illustrates an example configuration of a federated learning (FL) model in a wireless network. The wireless network of FIG. 1 may include a plurality of UEs, such as UE 101, UE 102, and UE 103, which each has a local storage (e.g., 104, 105, 106) to store generated data. Each of the UEs (e.g., 101, 102, 103) may communicate a partial model to a network entity 107, such as a gNB, which aggregates a single common model and communicates that aggregated model back to the UEs (e.g., 101, 102, 103).

After training a local model, each individual learner, such as UE 101, UE 102, and/or UE 103, transfers its local model data/parameters, instead of a raw training dataset, to an aggregating unit, which may be hosted at the network entity 107. The aggregator unit of the network entity 107 may use the received local model parameters to update a global/common model which may be fed back to the UEs (e.g., 101, 102, 103) for further iterations until the global model converges. As a result, each UE (e.g., 101, 102, 103) may benefit from the datasets of the other UEs (e.g., 101, 102, 103) through the global/common model, as shared by the aggregator unit, and may not need to explicitly access high volume of privacy-sensitive data available at each of the other UEs. In each round of model collection from the UEs (e.g., 101, 102, 103), the amount of data that may be transferred from each of the UEs (e.g., 101, 102, 103) to the network entity 107 consumes a significant and burdensome amount of network resources. Various exemplary embodiments herein may provide solutions to the need to design communication-efficient model collection schemes that reduce load on radio links.

3^{rd} Generation Partnership Project (3GPP) specifications may implement various levels of collaboration between a UE and a network for performing machine learning. For example, 3GPP may provide a level X having no collaboration, a level Y having signaling-based collaboration without transferring one or more model(s), and/or a level Z having signaling-based collaboration with the transfer of one or more models. The collaboration may also apply to gNB-gNB, intra-gNB, and UE-UE cases as well. In these examples, level X may not require collaboration between the UE and the network, while level Y and level Z may require coordination for collaboration between the UE and network entities. Federated learning (FL) may be linked to collaboration level Z, which may provide for signaling between the UE and the network and may provide for transferring a UE model between the UE and the network entity. When there is a large number of UEs (e.g., order of hundreds and thousands) and a high number of iterations (e.g., order of thousands), high communication and interaction between the UEs and network may occur. In this situation, a reduction in communication over the air interface may be advantageous.

In synchronous mode FL model collection, the local trained models from the UEs may not be aggregated until all the models are available at the network (e.g., gNB). A parameter aggregation algorithm, such as FedAvg, may be used to calculate averages of model parameters when aggregating the parameters. It may be desirable for the local models from the UEs to be available within a time limit or time period Dₘₐₓ to avoid unnecessarily delaying of parameter aggregation. There may be circumstances in which timely parameter aggregation may not be possible within the time limit or time period Dₘₐₓ because, for example, a UE may not have the required computational power available to process training in a timely manner or data size for the UE may be larger as compared to the other UEs, which may require additional time to process and train. As another example, a link quality between the UE and the network may be relatively poor or blocked preventing timely communication between the UE and the network.

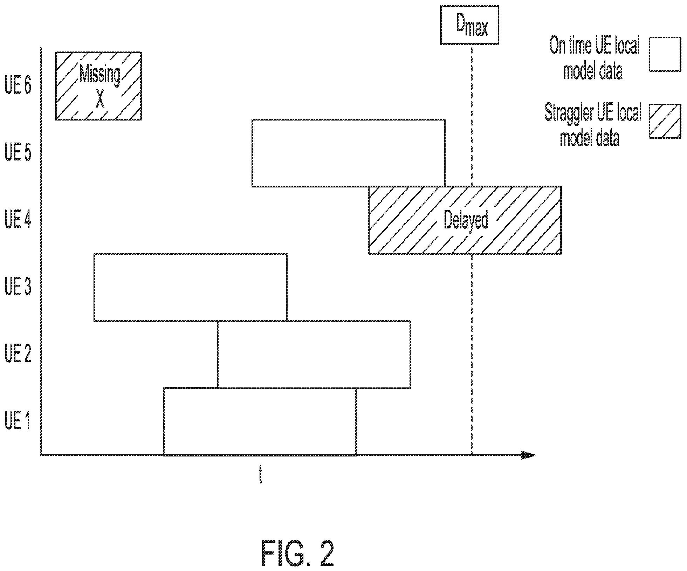

FIG. 2 illustrates an example of a diagram showing time for different UEs to provide model data to a network. As shown in FIG. 2, one or more UEs may delay model aggregation by the network even when data from multiple UEs is available. For example, a local trained model from UE 6 never arrives at the network, which may be due to a blocked signal or limited coverage. A local model from UE 4 may be delayed more than Dₘₐₓ and may delay model aggregation at the network. In this exemplary situation, UE 6 and UE 4 may be determined to be stragglers in FL.

Various exemplary embodiments may provide technological advantages to support one or more procedures for identifying consistent straggler UEs, who are delaying model aggregation and removing the straggler UEs from the network configuration on temporary basis. By temporarily removing communication between the straggler UE(s) and the network, a latency budget for model aggregation in a particular iteration may be achieved without a significant loss of performance in FL model convergence. Some exemplary embodiments may provide that the network, such as a gNB, may not transmit the aggregated model to the straggler UEs and may reduce the load on the radio links. Some exemplary embodiments may provide advantages in which the aggregator unit of the network may not unnecessarily wait (e.g., delay) for the straggler UEs, which may provide for faster iterations of the aggregated model.

Certain exemplary embodiments may determine that a UE may be a consistent straggler when a UE has been a straggler for more than a number M of consecutive iterations of FL model collection. The UE may be declared a consistent straggler when its local model arrives at an aggregator unit of the network entity with a delay D >Dₘₐₓ for at least M consecutive iterations, which may include instances in which the local model never arrived at the network from the UE, for example, due to complete lack of coverage. Additionally or alternatively, the UE may be declared a consistent straggler if its locally trained machine learning model is received at the network with a delay of more than a threshold time for more than a threshold number of times in a timer window of a defined number of iterations.

Various exemplary embodiments may provide one or more procedures for identifying consistent straggler UEs among multiple UEs and suspending or ceasing sending an aggregated model for local model training to the identified consistent straggler UEs. The terms straggler and consistent straggler may be used interchangeably herein to refer to consistent stragglers. Certain exemplary embodiments may improve the link efficiency of the transmission on downlink from the network entity to UE because the transmissions with aggregated models may be sent to those UEs which are not consistent stragglers which reduces the waste of network resources and delay in model aggregation. Consistent straggler UEs may not be permanently blocked from taking part in FL, as they might have unique training data to contribute to FL. Some exemplary embodiments may provide one or more procedures for evaluating when network conditions and/or computational power of the straggler UEs becomes good/high enough to resume their participation in the FL processes.

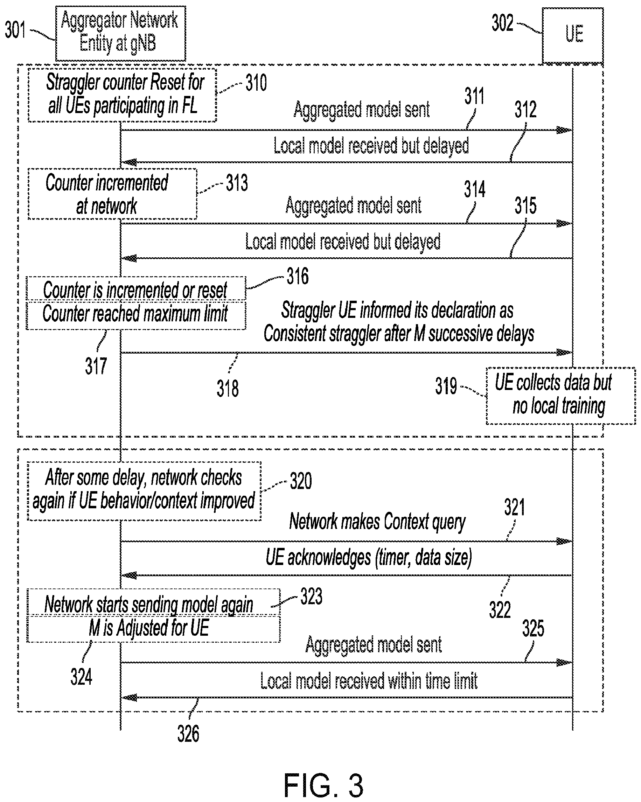

FIG. 3 illustrates an example of a signal diagram, according to various exemplary embodiments. The signal diagram may represent one or more procedures between an aggregator network entity 301, such as a gNB, and a UE 302 over, for example, an air interface. A training host may be hosted in the UE 302 and an aggregator may be hosted at the network entity 301. However, the embodiments are not limited to only this scenario and the training host and aggregator may be hosted elsewhere on the network. For example, the training host may be hosted in a core network.

Various exemplary embodiments may provide that the one or more procedures of FIG. 3 may include, at 310, before starting FL, a straggler counter *Cᵢ* may be reset at an FL management entity at in the network entity 301 for all participating UEs (e.g., UE 302). The straggler counter *Cᵢ* may be used to track straggler UEs in each iteration of the FL. At 311, the network entity 301 may provide an FL model aggregated in an ith iteration to all UEs, such as UE 302, to use the FL model for local model training for (i+1)th iteration. At 312, the UE 302 may generate (e.g., train) a locally trained model and provide the locally trained model to the aggregator of the network entity 301 for the (i+1)th iteration. In this example of FIG. 3, it may be assumed that this locally trained model may be delayed more than a threshold Dₘₐₓ set for receiving all locally trained models from UEs in each iteration.

Certain exemplary embodiments may provide, at 313, the network entity 301 may incrementally increase the straggler counter *Cᵢ* for the UE 302, which is delayed. The straggler counter *Cᵢ* may be used to track a model delay for each iteration. At 314, the network entity 301 may provide the FL model aggregated in the (i+1)th iteration to, for example, UE 302, to use the FL model for local model training for (i+2)th iteration. At 315, the UE 302 may generate and train the locally trained model and provide the locally trained model to the network entity 301 for the (i+2)th iteration. At 316, the network entity 301 may incrementally further increase the straggler counter *Cᵢ* for the UE 302 when the locally trained model is delayed for the (i+2)th iteration. For all the UEs whose models arrive at the network within delay threshold Dₘₐₓ, the straggler counter *Cᵢ* is reset after each iteration. At 317, when the straggler counter *Cᵢ* has reached a maximum allowed delay threshold M, such that C = M, the UE 302 may be declared a consistent straggler UE. The threshold M may be reached after a number of consecutive or successive delays in iterations.

Some exemplary embodiments may provide, at 318, the network entity 301 may inform the UE 302 that the UE 302 has been declared a consistent straggler UE. At 319, the UE 302 may use this information declaring the UE 302 a consistent straggler UE to suspend training of the locally trained model. During the suspension period, the UE 302 may not provide the locally trained model to the network entity 301 for a random or predetermined period of time. The UE 302 may continue to collect data for a training dataset and wait for training to be resumed or reinstated. Certain exemplary embodiments may provide procedures 310-319 to allow for consistent straggler detection/determination.

Various exemplary embodiments may provide that, at 320, one or more procedures begin for reinstating or resuming the participation of the UE 302 in the FL process, after a random time within a predefined time period or after a predefined time period. The network entity 301 may generate a query message to query the UE 302 to evaluate a network condition, such as a link quality, and/or a computational power of the UE 302. The query from the network entity 301 may be used to determine whether the condition leading to the delay, which previously caused the UE 302 to be declared a consistent straggler UE, has improved sufficiently to resume the UE 302's participation in FL. At 321, the query message may be provided to the UE 302 to request context information from the UE 302, such as, for example, an availability of new data as compared to the data used for the last locally trained local model, the computational power of the UE 302, a quality of service (QoS) metric information of the UE 302 and/or other information which may indicate whether the UE 302 may be reinstated to the FL process. At 322, the UE 302 may provide a response message to the network entity 301 which includes, for example, an acknowledgement (ACK) or non-acknowledgement (NACK) indication. The response message may also include the context information. When the response message includes a NACK indication, a timer may also be included from the UE 302 that informs the network entity 301 of when to contact the UE 302 if the UE 302 is not ready.

At 323, when the network entity 301 receives a response message including an ACK indication, the network entity 301 may decide to reinstate the UE 302 into the FL process, and the straggler counter may be reset. At 324, if the response message received by the network entity 301 includes a NACK indication or no response message is received, the UE 302 may still be considered a consistent straggler. Because the UE 302 is suspended from the FL process, the straggler counter *Cᵢ* may continue to be disregarded and may not be incremented.

At 325, when the network entity 301 receives the response message with the ACK indication to reinstate the UE 302 into the FL process at procedure 323, the network entity 301 may provide an FL model aggregated in an ith iteration to the UE 302 for local model training for (i+1)th iteration, since the straggler counter *Cᵢ* has been reset. At 326, the UE 302 may generate (e.g., train) a locally trained model and provide the locally trained model to the network entity 301 for the (1+1)th iteration. For example, the locally trained model may be provided to the network entity 301 within the time threshold Dₘₐₓ.

Various exemplary embodiments may advantageously provide for improving selection of the UEs participating in FL without, for example, network assistance. Without network assistance in FL member selection for each iteration, delay divergence in trained model collection may be reduced in each iteration as the network entity may be unaware of UE's radio conditions, coverage and/or the like and using the same procedure to handle consistent straggler UEs in each iteration may not be efficient. When consistent straggler UEs are already identified, certain exemplary embodiments allow for improving its selection of UEs and may avoid unnecessary use of network resources to collect trained models from UEs with deep fade (e.g., minimal coverage).

Certain exemplary embodiments may provide an asynchronous procedure in which the network/network entity may perform selection of UEs in the FL process. It may be assumed that the network may provide information on radio conditions (e.g., uplink signal to interference and noise ratio (SINR) per beam, which the UE may use to adjust its uplink transmission of the locally trained model) for FL members (e.g., UEs) before selection is applied in each iteration. In this case, the network needs to provide the information on radio conditions about all FL members (e.g., UEs) in each iteration before node selection is provided. The network may be able to detect consistent straggler UEs to reduce unnecessary information flow and stop collecting information from the respective UEs.

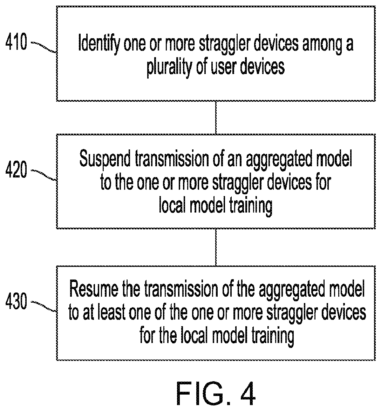

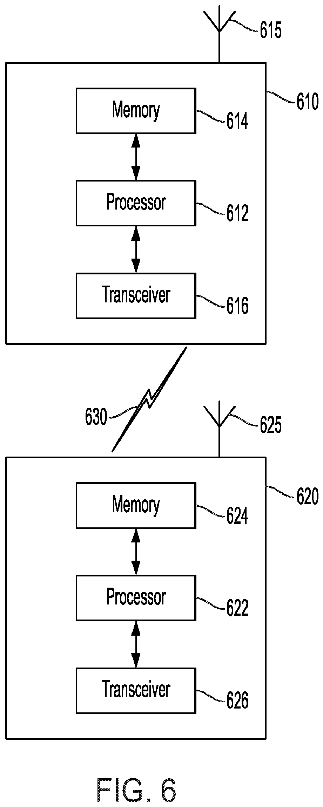

FIG. 4 illustrates an example flow diagram of a method, according to certain exemplary embodiments. In an example embodiment, the method of FIG. 4 may be performed by a network element/entity, or a group of multiple network entities in a 3GPP system, such as LTE or 5G-NR. For instance, in an exemplary embodiment, the method of FIG. 4 may be performed by network node or network entity, such as a gNB, similar to apparatus 610 illustrated in FIG. 6.

According to various exemplary embodiments, the method of FIG. 4 may include, at 410, identifying one or more straggler devices among a plurality of user devices, and at 420, suspending transmission of an aggregated model to the one or more straggler devices for local model training. The method may also include, at 430, resuming the transmission of the aggregated model to at least one of the one or more straggler devices for the local model training.

Certain exemplary embodiments may provide that at least one user device of the plurality of user devices is identified as the one or more straggler devices based on a delay in the apparatus receiving a locally trained machine learning model exceeding a first threshold time period for more than a second threshold number of consecutive iterations. The resuming of the transmission may include transmitting the aggregated model to at least one of the one or more straggler devices, which may result in resetting a straggler counter for this at least one straggler device. Some exemplary embodiments may provide that the method further includes receiving the locally trained machine learning model from the at least one user device. The delay in receiving the locally trained machine learning model may exceed the first threshold time period.

Various exemplary embodiments may provide that the method also includes transmitting an indication to the identified one or more straggler devices informing that the one or more straggler devices have been identified as a straggler. The method may further include after suspending the transmission of the aggregated model to the one or more straggler devices, evaluating at least one of: a network condition in which the apparatus and the plurality of user devices are operating, or a computational power for the one or more straggler devices to support the local model training of the one or more straggler devices. The resuming the transmission of the aggregated model to the at least one of the one or more straggler devices for the local model training may be based on the evaluation indicating that the at least one of the network condition or the computational power to support the local model training is above a third threshold. The evaluation indicating that the at least one of the network condition or the computational power is above the third threshold may be performed when a federated learning process is not finished while suspending the transmission.

Some exemplary embodiments may provide that the method also includes transmitting a context inquiry message to the one or more straggler devices requesting information on the at least one of the network condition or the computational power to support local model training and receiving a response message from the one or more straggler devices. The response message may include an acknowledgement or non-acknowledgement message indicating information to determine whether to resume the transmission of the aggregated model to the at least one of the one or more straggler devices. Upon the response message including the non-acknowledgement message, a timer may be provided from the one or more straggler devices or another network entity to the apparatus which enables the apparatus to transmit the context inquiry message again once the timer expires.

Certain exemplary embodiments may provide that the method further includes upon receiving the response message including the acknowledgement message, resuming the transmission of the aggregated model to the at least one of the one or more straggler devices for the local model training. The one or more straggler devices may be user devices which cause a delay in the apparatus receiving a locally trained machine learning model for more than a fourth threshold number of times in a timer window of a defined number of iterations.

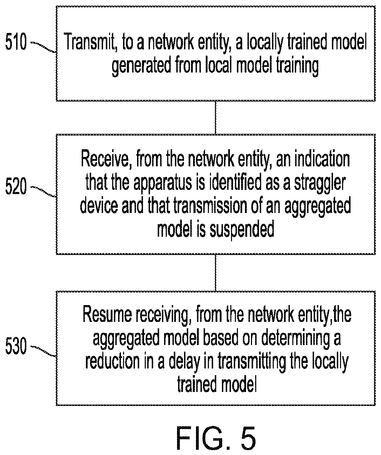

FIG. 5 illustrates an example flow diagram of a method, according to certain exemplary embodiments. In an example embodiment, the method of FIG. 5 may be performed by a device or user equipment within a network in a 3GPP system, such as LTE or 5G-NR. For instance, in an exemplary embodiment, the method of FIG. 5 may be performed by a UE, similar to apparatus 620 illustrated in FIG. 6.

According to various exemplary embodiments, the method of FIG. 5 may include, at 510, transmitting, to a network entity, a locally trained model generated from local model training, and at 520, receiving, from the network entity, an indication that the apparatus is identified as a straggler device and that transmission of an aggregated model is suspended. At 530, the method may also include resuming receiving, from the network entity, the aggregated model based on determining a reduction in a delay in transmitting the locally trained model.

Some exemplary embodiments may provide that the indication that the apparatus is identified as the straggler device may be based on the delay in the network entity in receiving the locally trained model exceeding a first threshold time period for more than a second threshold number of consecutive iterations. Certain exemplary embodiments may provide that the method also includes collecting training data for the locally trained model during a time period between the receiving the indication that transmission of the aggregated model is suspended and the resuming receiving the aggregated model. The method may further include receiving a context inquiry message from the network entity requesting information on at least one of: a network condition or a computational power of the apparatus to support local model training.

Various exemplary embodiments may provide that the method also includes transmitting a response message to the network entity including the information on the at least one of the network condition or the computational power of the apparatus. The information may include at least one of a timer or a network condition indicator. The response message may include an acknowledgement or non-acknowledgement message indicating information for the network entity to determine whether to resume transmission of the aggregated model. Certain exemplary embodiments may provide that the method includes transmitting, to the network entity, a timer with the response message upon the response message including the non-acknowledgement message, and monitoring to receive, from the network entity, the context inquiry message again once the timer expires.

Some exemplary embodiments may provide that the method also includes resuming receiving the aggregated model from the network entity for the local model training, after transmitting the response message including the acknowledgement message. The apparatus may be identified as the straggler device when the delay in transmitting the locally trained model occurs for more than a fourth threshold number of times in a timer window of a defined number of iterations.

FIG. 6 illustrates apparatuses 610 and 620 according to various exemplary embodiments. In the various exemplary embodiments, apparatus 610 may be an element in a network or associated with the network, or a network entity, such as a gNB. gNB 301 may be an example of apparatus 610 according to various exemplary embodiments as discussed above. It should be noted that one of ordinary skill in the art would understand that apparatus 610 may include components or features not shown in FIG. 6. Further, the apparatus 620 may be an element in a communications network or network entity, such as UE, RedCap UE, SL UE, mobile equipment (ME), mobile station, mobile device, stationary device, IoT device, or another device. For example, UE 302 according to various exemplary embodiments discussed above may be an example of apparatus 620. It should be noted that one of ordinary skill in the art would understand that apparatus 620 may include components or features not shown in FIG. 6.

According to various exemplary embodiments, the apparatuses 610 and/or 620 may include one or more processors, one or more computer-readable storage medium (for example, memory, storage, or the like), one or more radio access components (for example, a modem, a transceiver, or the like), and/or a user interface. In some exemplary embodiments, apparatuses 610 and/or 620 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 6, apparatuses 610 and/or 620 may include or be coupled to processors 612 and 622, respectively, for processing information and executing instructions or operations. Processors 612 and 622 may be any type of general or specific purpose processor. In fact, processors 612 and 622 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 612 (and 622) for each of apparatuses 610 and/or 620 is shown in FIG. 6, multiple processors may be utilized according to other example embodiments. For example, it should be understood that, in certain example embodiments, apparatuses 610 and/or 620 may include two or more processors that may form a multiprocessor system (for example, in this case processors 612 and 622 may represent a multiprocessor) that may support multiprocessing. According to certain example embodiments, the multiprocessor system may be tightly coupled or loosely coupled to, for example, form a computer cluster.

Processors 612 and 622 may perform functions associated with the operation of apparatuses 610 and/or 620, respectively, including, as some examples, precoding of antenna gain/phase parameters, encoding and decoding of individual bits forming a communication message, formatting of information, and overall control of the apparatuses 610 and/or 620, including processes illustrated in FIGs. 3-5.

Apparatuses 610 and/or 620 may further include or be coupled to memory 614 and/or 624 (internal or external), respectively, which may be coupled to processors 612 and/or 622, respectively, for storing information and instructions that may be executed by processors 612 and 622. Memory 614 (and memory 624) may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 614 (and memory 624) can be comprised of any combination of random access memory (RAM), read only memory (ROM), static storage such as a magnetic or optical disk, hard disk drive (HDD), or any other type of non-transitory machine or computer readable media. The instructions stored in memory 614 and memory 624 may include program instructions or computer program code that, when executed by processors 612 and 622, enable the apparatuses 610 and/or 620 to perform tasks as described herein.

In certain example embodiments, apparatuses 610 and/or 620 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 612 and 622 and/or apparatuses 610 and/or 620 to perform any of the methods illustrated in FIGs. 3-5.

In some exemplary embodiments, apparatuses 610 and/or 620 may also include or be coupled to one or more antennas 615 and 625, respectively, for receiving a downlink signal and for transmitting via an uplink from apparatuses 610 and/or 620. Apparatuses 610 and/or 620 may further include transceivers 616 and 626, respectively, configured to transmit and receive information. The transceivers 616 and 626 may also include a radio interface (for example, a modem) respectively coupled to the antennas 615 and 625. The radio interface may correspond to a plurality of radio access technologies including one or more of GSM, LTE, LTE-A, 5G, NR, WLAN, NB-IoT, Bluetooth, BT-LE, NFC, RFID, UWB, or the like. The radio interface may include other components, such as filters, converters (for example, digital-to-analog converters or the like), symbol demappers, signal shaping components, an Inverse Fast Fourier Transform (IFFT) module, or the like, to process symbols, such as OFDMA symbols, carried by a downlink or an uplink.

For instance, transceivers 616 and 626 may be respectively configured to modulate information on to a carrier waveform for transmission by the antenna(s) 615 and 625, and demodulate information received via the antenna(s) 615 and 625 for further processing by other elements of apparatuses 610 and/or 620. In other example embodiments, transceivers 616 and 626 may be capable of transmitting and receiving signals or data directly. Additionally or alternatively, in some example embodiments, apparatuses 610 and/or 620 may include an input and/or output device (I/O device). In certain example embodiments, apparatuses 610 and/or 620 may further include a user interface, such as a graphical user interface or touchscreen.

In certain example embodiments, memory 614 and memory 624 may store software modules that provide functionality when executed by processors 612 and 622, respectively. The modules may include, for example, an operating system that provides operating system functionality for apparatuses 610 and/or 620. The memory may also store one or more functional modules, such as an application or program, to provide additional functionality for apparatuses 610 and/or 620. The components of apparatuses 610 and/or 620 may be implemented in hardware, or as any suitable combination of hardware and software. According to certain example embodiments, apparatus 610 may optionally be configured to communicate with apparatus 620 via a wireless or wired communications link 630 according to any radio access technology, such as NR.

According to certain example embodiments, processors 612 and 622, and memory 614 and 624 may be included in or may form a part of processing circuitry or control circuitry. In addition, in some example embodiments, transceivers 616 and 626 may be included in or may form a part of transceiving circuitry.

For instance, in certain exemplary embodiments, the apparatus 610 may be controlled by the memory 614 and the processor 612 to identify one or more straggler devices among a plurality of user devices and suspend transmission of an aggregated model to the one or more straggler devices for local model training. The apparatus 610 may also be controlled to resume the transmission of the aggregated model to at least one of the one or more straggler devices for the local model training.

Some exemplary embodiments may provide that the apparatus 620 may be controlled by the memory 624 and the processor 622 to transmit, to a network entity, a locally trained model generated from local model training and receive, from the network entity, an indication that the apparatus 620 is identified as a straggler device and that transmission of an aggregated model is suspended. The apparatus 620 may also be controlled to resume receiving, from the network entity, the aggregated model based on determining a reduction in a delay in transmitting the locally trained model.

In some exemplary embodiments, an apparatus (e.g., apparatus 610 and/or apparatus 620) may include means for performing a method, a process, or any of the variants discussed herein. Examples of the means may include one or more processors, memory, controllers, transmitters, receivers, and/or computer program code for causing the performance of the operations.

Various exemplary embodiments may be directed to an apparatus, such as apparatus 610, that includes means for identifying one or more straggler devices among a plurality of user devices and means for suspending transmission of an aggregated model to the one or more straggler devices for local model training. The apparatus 610 may also include means for resuming the transmission of the aggregated model to at least one of the one or more straggler devices for the local model training.

Certain exemplary embodiments may be directed to an apparatus, such as apparatus 620, that includes means for transmitting, to a network entity, a locally trained model generated from local model training and means for receiving, from the network entity, an indication that the apparatus 620 is identified as a straggler device and that transmission of an aggregated model is suspended. The apparatus 620 may also include means for resuming receiving, from the network entity, the aggregated model based on determining a reduction in a delay in transmitting the locally trained model.

As used herein, the term "circuitry" may refer to hardware-only circuitry implementations (for example, analog and/or digital circuitry), combinations of hardware circuits and software, combinations of analog and/or digital hardware circuits with software/firmware, any portions of hardware processor(s) with software, including digital signal processors, that work together to cause an apparatus (for example, apparatus 610 and/or 620) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor or multiple processors, or portion of a hardware circuit or processor, and the accompanying software and/or firmware. The term circuitry may also cover, for example, a baseband integrated circuit in a server, cellular network node or device, or other computing or network device.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (for example, apparatuses 610 and/or 620), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) and/or sixth (6G) technology.

### Partial Glossary:

- 3GPP: 3rd Generation Partnership Project
- 5G: 5th Generation
- 6G: 6^{th} Generation
- EMBB: Enhanced Mobile Broadband
- FL: Federated Learning
- gNB: 5G or Next Generation NodeB
- LTE: Long Term Evolution
- ML: Machine Learning
- NR: New Radio
- UE: User Equipment

Further aspects and embodiments are set out in the following numbered paragraphs:
1. An apparatus, comprising:
   at least one processor; and
   at least one memory storing instructions that, when executed by the at least one processor, cause the apparatus at least to:
      identify one or more straggler devices among a plurality of user devices;
      suspend transmission of an aggregated model to the one or more straggler devices for local model training; and
      resume the transmission of the aggregated model to at least one of the one or more straggler devices for the local model training.
2. The apparatus according to paragraph 1, wherein at least one user device of the plurality of user devices is identified as the one or more straggler devices based on a delay in the apparatus receiving a locally trained machine learning model exceeding a first threshold time period for more than a second threshold number of consecutive iterations.
3. The apparatus according to paragraph 2, wherein:
   the resuming the transmission comprises transmitting the aggregated model to at least one of the one or more straggler devices; and
   the at least one memory stores instructions that, when executed by the at least one processor, cause the apparatus to:
      receive the locally trained machine learning model from the at least one user device, wherein the delay in receiving the locally trained machine learning model exceeds the first threshold time period.
4. The apparatus according to any of paragraphs 1 to 3, wherein the at least one memory stores instructions that, when executed by the at least one processor, cause the apparatus to:
   transmit an indication to the identified one or more straggler devices informing that the one or more straggler devices have been identified as a straggler.
5. The apparatus according to any of paragraphs 1 to 4, wherein the at least one memory stores instructions that, when executed by the at least one processor, cause the apparatus to:
   after suspending the transmission of the aggregated model to the one or more straggler devices, evaluate at least one of: a network condition in which the apparatus and the plurality of user devices are operating, or a computational power for the one or more straggler devices to support the local model training of the one or more straggler devices.
6. The apparatus according to paragraph 5, wherein the resuming the transmission of the aggregated model to the at least one of the one or more straggler devices for the local model training is based on the evaluation indicating that the at least one of the network condition or the computational power to support the local model training is above a third threshold.
7. The apparatus according to paragraph 6, wherein the evaluation indicating that the at least one of the network condition or the computational power is above the third threshold is performed when a federated learning process is not finished while suspending the transmission.
8. The apparatus according to paragraph 5 or paragraph 6, wherein the at least one memory stores instructions that, when executed by the at least one processor, cause the apparatus to:
   transmit a context inquiry message to the one or more straggler devices requesting information on the at least one of the network condition or the computational power to support local model training; and
   receive a response message from the one or more straggler devices.
9. The apparatus according to paragraph 8, wherein the response message comprises an acknowledgement or non-acknowledgement message indicating information to determine whether to resume the transmission of the aggregated model to the at least one of the one or more straggler devices.
10. The apparatus according to paragraph 9, wherein upon the response message comprising the non-acknowledgement message, a timer is provided from the one or more straggler devices or another network entity to the apparatus which enables the apparatus to transmit the context inquiry message again once the timer expires.
11. The apparatus according to paragraph 9, wherein the at least one memory stores instructions that, when executed by the at least one processor, cause the apparatus to:
   upon receiving the response message comprising the acknowledgement message, resume the transmission of the aggregated model to the at least one of the one or more straggler devices for the local model training.
12. The apparatus according to any one of paragraphs 1 to 11, wherein the one or more straggler devices are user devices which cause a delay in the apparatus receiving a locally trained machine learning model for more than a fourth threshold number of times in a timer window of a defined number of iterations.
13. An apparatus, comprising:
   at least one processor; and
   at least one memory storing instructions that, when executed by the at least one processor, cause the apparatus at least to:
      transmit, to a network entity, a locally trained model generated from local model training;
      receive, from the network entity, an indication that the apparatus is identified as a straggler device and that transmission of an aggregated model is suspended; and
      resume receiving, from the network entity, the aggregated model based on determining a reduction in a delay in transmitting the locally trained model.
14. The apparatus according to paragraph 13, wherein the indication that the apparatus is identified as the straggler device is based on the delay in the network entity in receiving the locally trained model exceeding a first threshold time period for more than a second threshold number of consecutive iterations.
15. The apparatus according to paragraph 13 or paragraph 14, wherein the at least one memory stores instructions that, when executed by the at least one processor, cause the apparatus to:
   collect training data for the locally trained model during a time period between the receiving the indication that transmission of the aggregated model is suspended and the resuming receiving the aggregated model.
16. The apparatus according to any one or paragraphs 13 to 15, wherein the at least one memory stores instructions, when executed by the at least one processor, cause the apparatus to:
   receive a context inquiry message from the network entity requesting information on at least one of: a network condition or a computational power of the apparatus to support local model training.
17. The apparatus according to paragraph 16, wherein the at least one memory stores instructions that, when executed by the at least one processor, cause the apparatus to:
   transmit a response message to the network entity comprising the information on the at least one of the network condition or the computational power of the apparatus, wherein the information comprises at least one of a timer or a network condition indicator.
18. The apparatus according to paragraph 16 or paragraph 17, wherein the response message comprises an acknowledgement or non-acknowledgement message indicating information for the network entity to determine whether to resume transmission of the aggregated model.
19. The apparatus according to paragraph 18, wherein the at least one memory stores instructions that, when executed by the at least one processor, cause the apparatus to:
   upon the response message comprising the non-acknowledgement message, transmit, to the network entity, a timer with the response message; and
   monitor to receive, from the network entity, the context inquiry message again once the timer expires.
20. The apparatus according to paragraph 18, wherein the at least one memory stores instructions that, when executed by the at least one processor, cause the apparatus to:
   after transmitting the response message comprising the acknowledgement message, resume receiving the aggregated model from the network entity for the local model training.
21. The apparatus according to any one of paragraphs 13 to 20, wherein the apparatus is identified as the straggler device when the delay in transmitting the locally trained model occurs for more than a fourth threshold number of times in a timer window of a defined number of iterations.
22. A method, comprising:
   identifying, by an apparatus, one or more straggler devices among a plurality of user devices;
   suspending, by the apparatus, transmission of an aggregated model to the one or more straggler devices for local model training; and
   resuming, by the apparatus, the transmission of the aggregated model to at least one of the one or more straggler devices for the local model training.
23. The method according to paragraph 22, wherein at least one user device of the plurality of user devices is identified as the one or more straggler devices based on a delay in the apparatus receiving a locally trained machine learning model exceeding a first threshold time period for more than a second threshold number of consecutive iterations.
24. The method according to paragraph 23, wherein:
   the resuming the transmission comprises transmitting the aggregated model to at least one of the one or more straggler devices; and
   the method further comprises:
      receiving the locally trained machine learning model from the at least one user device, wherein the delay in receiving the locally trained machine learning model exceeds the first threshold time period.
25. The method according to any of paragraphs 22 to 24, further comprising:
   transmitting an indication to the identified one or more straggler devices informing that the one or more straggler devices have been identified as a straggler.
26. The method according to any of paragraphs 22 to 25, further comprising:
   after suspending the transmission of the aggregated model to the one or more straggler devices, evaluating at least one of: a network condition in which the apparatus and the plurality of user devices are operating, or a computational power for the one or more straggler devices to support the local model training of the one or more straggler devices.
27. The method according to paragraph 26, wherein the resuming the transmission of the aggregated model to the at least one of the one or more straggler devices for the local model training is based on the evaluation indicating that the at least one of the network condition or the computational power to support the local model training is above a third threshold.
28. The method according to paragraph 27, wherein the evaluation indicating that the at least one of the network condition or the computational power is above the third threshold is performed when a federated learning process is not finished while suspending the transmission.
29. The method according to paragraph 26 or paragraph 27, further comprising:
   transmitting a context inquiry message to the one or more straggler devices requesting information on the at least one of the network condition or the computational power to support local model training; and
   receiving a response message from the one or more straggler devices.
30. The method according to paragraph 29, wherein the response message comprises an acknowledgement or non-acknowledgement message indicating information to determine whether to resume the transmission of the aggregated model to the at least one of the one or more straggler devices.
31. The method according to paragraph 30, wherein upon the response message comprising the non-acknowledgement message, a timer is provided from the one or more straggler devices or another network entity to the apparatus which enables the apparatus to transmit the context inquiry message again once the timer expires.
32. The method according to paragraph 30, further comprising:
   upon receiving the response message comprising the acknowledgement message, resuming the transmission of the aggregated model to the at least one of the one or more straggler devices for the local model training.
33. The method according to any one of paragraphs 22 to 32, wherein the one or more straggler devices are user devices which cause a delay in the apparatus receiving a locally trained machine learning model for more than a fourth threshold number of times in a timer window of a defined number of iterations.
34. A method, comprising:
   transmitting, by an apparatus to a network entity, a locally trained model generated from local model training;
   receiving, by the apparatus from the network entity, an indication that the apparatus is identified as a straggler device and that transmission of an aggregated model is suspended; and
   resuming receiving, by the apparatus from the network entity, the aggregated model based on determining a reduction in a delay in transmitting the locally trained model.
35. The method according to paragraph 34, wherein the indication that the apparatus is identified as the straggler device is based on the delay in the network entity in receiving the locally trained model exceeding a first threshold time period for more than a second threshold number of consecutive iterations.
36. The method according to paragraph 34 or paragraph 35, further comprising:
   collecting training data for the locally trained model during a time period between the receiving the indication that transmission of the aggregated model is suspended and the resuming receiving the aggregated model.
37. The method according to any one or paragraphs 34 to 36, further comprising:
   receiving a context inquiry message from the network entity requesting information on at least one of: a network condition or a computational power of the apparatus to support local model training.
38. The method according to paragraph 37, further comprising:
   transmitting a response message to the network entity comprising the information on the at least one of the network condition or the computational power of the apparatus, wherein the information comprises at least one of a timer or a network condition indicator.
39. The method according to paragraph 37 or paragraph 38, wherein the response message comprises an acknowledgement or non-acknowledgement message indicating information for the network entity to determine whether to resume transmission of the aggregated model.
40. The method according to paragraph 39, further comprising:
   upon the response message comprising the non-acknowledgement message, transmitting, to the network entity, a timer with the response message; and
   monitoring to receive, from the network entity, the context inquiry message again once the timer expires.
41. The method according to paragraph 39, further comprising:
   after transmitting the response message comprising the acknowledgement message, resuming receiving the aggregated model from the network entity for the local model training.
42. The method according to any one of paragraphs 34 to 41, wherein the apparatus is identified as the straggler device when the delay in transmitting the locally trained model occurs for more than a fourth threshold number of times in a timer window of a defined number of iterations.
43. An apparatus, comprising:
   means for identifying one or more straggler devices among a plurality of user devices;
   means for suspending transmission of an aggregated model to the one or more straggler devices for local model training; and
   means for resuming the transmission of the aggregated model to at least one of the one or more straggler devices for the local model training.
44. An apparatus, comprising:
   means for transmitting, to a network entity, a locally trained model generated from local model training;
   means for receiving, from the network entity, an indication that the apparatus is identified as a straggler device and that transmission of an aggregated model is suspended; and
   means for resuming receiving, from the network entity, the aggregated model based on determining a reduction in a delay in transmitting the locally trained model.
45. A non-transitory computer readable medium comprising program instructions that, when executed by an apparatus, cause the apparatus at least to:
   identify one or more straggler devices among a plurality of user devices;
   suspend transmission of an aggregated model to the one or more straggler devices for local model training; and
   resume the transmission of the aggregated model to at least one of the one or more straggler devices for the local model training.
46. A non-transitory computer readable medium comprising program instructions that, when executed by an apparatus, cause the apparatus at least to:
   transmit, to a network entity, a locally trained model generated from local model training;
   receive, from the network entity, an indication that the apparatus is identified as a straggler device and that transmission of an aggregated model is suspended; and
   resume receiving, from the network entity, the aggregated model based on determining a reduction in a delay in transmitting the locally trained model.
47. A non-transitory computer readable medium comprising program instructions that, when executed, cause an apparatus to perform the method according to any one of paragraphs 22 to 33.
48. A non-transitory computer readable medium comprising program instructions that, when executed, cause an apparatus to perform the method according to any one of paragraphs 34 to 42.

## Claims

1. An apparatus (610), comprising:
means for identifying one or more straggler devices among a plurality of user devices (410);
means for suspending transmission of an aggregated model to the one or more straggler devices for local model training (420); and
means for resuming the transmission of the aggregated model to at least one of the one or more straggler devices for the local model training (430).

2. The apparatus according to claim 1, wherein at least one user device of the plurality of user devices is identified as the one or more straggler devices based on a delay in the apparatus receiving a locally trained machine learning model exceeding a first threshold time period for more than a second threshold number of consecutive iterations.

3. The apparatus according to claim 2, wherein:
the means for resuming the transmission comprises means for transmitting the aggregated model to at least one of the one or more straggler devices; and
the apparatus further comprising:
means for receiving the locally trained machine learning model from the at least one user device, wherein the delay in receiving the locally trained machine learning model exceeds the first threshold time period.

4. The apparatus according to any of claims 1 to 3, further comprising:
means for transmitting an indication to the identified one or more straggler devices informing that the one or more straggler devices have been identified as a straggler.

5. The apparatus according to any of claims 1 to 4, further comprising:
means for, after suspending the transmission of the aggregated model to the one or more straggler devices, evaluating at least one of: a network condition in which the apparatus and the plurality of user devices are operating, or a computational power for the one or more straggler devices to support the local model training of the one or more straggler devices.

6. The apparatus according to claim 5, wherein the resuming the transmission of the aggregated model to the at least one of the one or more straggler devices for the local model training is based on the evaluation indicating that the at least one of the network condition or the computational power to support the local model training is above a third threshold.

7. The apparatus according to claim 6, wherein the evaluation indicating that the at least one of the network condition or the computational power is above the third threshold is performed when a federated learning process is not finished while suspending the transmission.

8. The apparatus according to claim 5 or claim 6, further comprising:
means for transmitting a context inquiry message to the one or more straggler devices requesting information on the at least one of the network condition or the computational power to support local model training; and
means for receiving a response message from the one or more straggler devices.

9. The apparatus according to claim 8, wherein the response message comprises an acknowledgement or non-acknowledgement message indicating information to determine whether to resume the transmission of the aggregated model to the at least one of the one or more straggler devices.

10. The apparatus according to any one of claims 1 to 9, wherein the one or more straggler devices are user devices which cause a delay in the apparatus receiving a locally trained machine learning model for more than a fourth threshold number of times in a timer window of a defined number of iterations.

11. An apparatus (620), comprising:
means for transmitting, to a network entity, a locally trained model generated from local model training (510);
means for receiving, from the network entity, an indication that the apparatus is identified as a straggler device and that transmission of an aggregated model is suspended (520); and
means for resuming receiving, from the network entity, the aggregated model based on determining a reduction in a delay in transmitting the locally trained model (530).

12. The apparatus according to claim 11, wherein the indication that the apparatus is identified as the straggler device is based on the delay in the network entity in receiving the locally trained model exceeding a first threshold time period for more than a second threshold number of consecutive iterations.

13. The apparatus according to claim 11 or claim 12, further comprising:
means for collecting training data for the locally trained model during a time period between the receiving the indication that transmission of the aggregated model is suspended and the resuming receiving the aggregated model.

14. A method, comprising:
identifying, by an apparatus, one or more straggler devices among a plurality of user devices;
suspending, by the apparatus, transmission of an aggregated model to the one or more straggler devices for local model training; and
resuming, by the apparatus, the transmission of the aggregated model to at least one of the one or more straggler devices for the local model training.

15. A method, comprising:
transmitting, by an apparatus to a network entity, a locally trained model generated from local model training;
receiving, by the apparatus from the network entity, an indication that the apparatus is identified as a straggler device and that transmission of an aggregated model is suspended; and
resuming receiving, by the apparatus from the network entity, the aggregated model based on determining a reduction in a delay in transmitting the locally trained model.
